# EUROPEAN PATENT APPLICATION

(11) **EP 4 510 342 A1**
(43) Date of publication of application: **19.02.2025**
(21) Application number: 23788239.4
(22) Date of filing: 05.04.2023
(51) Int. Cl.: H01M 50/291, H01M 10/647, H01M 10/658, H01M 50/293

(54) **BATTERY CUSHIONING MATERIAL**

(30) Priority: 14.04.2022 JP 2022067204
(71) Applicant: NOK Corporation, Minato-ku Tokyo 105-8585 (JP)
(72) Inventor: KARUBE, Shotaro, Fujisawa-shi, Kanagawa 251-0042 (JP); YAMASAKI, Shunji, Fujisawa-shi, Kanagawa 251-0042 (JP); XU, Fangman, Fujisawa-shi, Kanagawa 251-0042 (JP); OYAMA, Takayuki, Fujisawa-shi, Kanagawa 251-0042 (JP)
(74) Representative: Global IP Europe Patentanwaltskanzlei
(86) International application number: PCT/JP2023/014071
(87) International publication number: WO 2023/199820

(57) **Abstract**

A battery-cushioning member disposed between a first rigid body and a second rigid body includes a sheet-shaped heat insulation member with a first surface and a second surface facing in a direction opposite to that of the first surface. At least one first elastic body is disposed on the first surface and formed integrally with the heat insulation member. The at least one first elastic body creates a partial space between the first surface and the first rigid body. Preferably, the battery-cushioning member further includes at least one second elastic body disposed on the second surface and formed integrally with the heat insulation member. The at least one second elastic body creates a partial space between the second surface and the second rigid body.

## Description

### TECHNICAL FIELD

The present invention relates to a battery-cushioning member.

### BACKGROUND ART

Battery modules such as lithium-ion battery modules are generally configured to have a plurality of battery cells housed side-by-side in a case. A sheet-shaped battery-cushioning member may be disposed between the battery cells. The battery-cushioning member reduces expansion and retraction of the battery cells upon charge and discharge, and prevents thermal runaway of the battery cells by reducing heat conduction between adjacent battery cells.

For example, Patent Document 1 discloses a cell holder that is sandwiched between battery cells. The cell holder is comprised of a metallic plate member with a thermally conductive rubber layer formed to be integral with one or both surfaces of the metallic plate member. The thermally conductive rubber layer of the cell holder is provided with a plurality of protrusions in contact with a battery cell.

### Related Art Document

### Patent Document

Patent Document 1 Japanese Patent Application, Laid-Open Publication No. 2014-010939

### SUMMARY OF THE INVENTION

### Problem to be Solved by the Invention

In the cell holder disclosed in Patent Document 1, thermal insulation between battery cells tends to be low due to the use of the metallic plate member. In particular, in the cell holder described in Patent Document 1 when the battery cells expand, the protrusions of the heat conductive rubber layer become deformed. As a result, a space between the thermally conductive rubber layer and the battery cells is reduced, leading to a significant degradation in thermal insulation between the battery cells.

If a temperature of a battery cell rises excessively for some reason, heat from the battery cell may be transferred to another battery cell resulting in excessive heat in the another battery cell, which is undesirable. Thus, there is a need to improve thermal insulation between battery cells, and room for improvement exists in the cell holder disclosed in Patent Document 1.

### Means of Solving the Problems

To solve the problem described above, a battery-cushioning member according to one aspect of the present disclosure is a battery-cushioning member disposed between a first rigid body and a second rigid body and includes a sheet-shaped heat insulation member with a first surface and a second surface that faces in an direction opposite to the direction of the first surface, and at least one first elastic body disposed on the first surface and formed integrally with the heat insulation member. The at least one first elastic body creates a partial space between the first surface and the first rigid body.

### BRIEF DESCRIPTION OF DRAWINGS

Fig. 1 is a perspective view of a battery-cushioning member according to a first embodiment.
Fig. 2 is a plan view of the battery-cushioning member according to the first embodiment.
Fig. 3 is a cross-sectional view taken along Line A-A in Fig. 2.
Fig. 4 is a drawing illustrating an example of a battery that includes the battery-cushioning member.
Fig. 5 is a drawing illustrating an example use state of the battery-cushioning member according to the first embodiment.
Fig. 6 is a drawing for explaining an action of the battery-cushioning member according to the first embodiment.
Fig. 7 is a cross-sectional view of a battery-cushioning member according to a second embodiment.
Fig. 8 is a cross-sectional view of a battery-cushioning member according to a third embodiment.
Fig. 9 is a cross-sectional view of a battery-cushioning member according to a fourth embodiment.
Fig. 10 is a cross-sectional view of a battery-cushioning member according to a fifth embodiment.
Fig. 11 is a plan view of a battery-cushioning member according to a sixth embodiment.
Fig. 12 is a cross-sectional view taken along Line B-B in Fig. 11.
Fig. 13 is a plan view of a battery-cushioning member according to a seventh embodiment.
Fig. 14 is a cross-sectional view taken along Line C-C in Fig. 13.
Fig. 15 is a plan view of a battery-cushioning member according to an eighth embodiment.
Fig. 16 is a cross-sectional view taken along Line D-D in Fig. 15.
Fig. 17 is a plan view of a battery-cushioning member according to a ninth embodiment.
Fig. 18 is a cross-sectional view taken along Line E-E in Fig. 17.
Fig. 19 is a plan view of a battery-cushioning member according to a first modification.
Fig. 20 is a plan view of a battery-cushioning member according to a second modification.
Fig. 21 is a perspective view of a battery-cushioning member according to a third modification.
Fig. 22 is a perspective view of a battery-cushioning member according to a fourth modification.
Fig. 23 is a cross-sectional view of a battery-cushioning member according to a fifth modification.
Fig. 24 is a cross-sectional view of a battery-cushioning member according to a sixth modification.

### MODES FOR CARRYING OUT THE INVENTION

A preferred embodiment according to the present disclosure will now be described with reference to the attached drawings. In the drawings, some portions are illustrated schematically for ease of understanding. Dimensions and a scale of elements illustrated in the drawings may differ from those of actual elements. The scope of the present disclosure is not limited to the embodiments, unless otherwise stated.

### 1. First Embodiment

### 1-1. Battery-Cushioning Member Structure

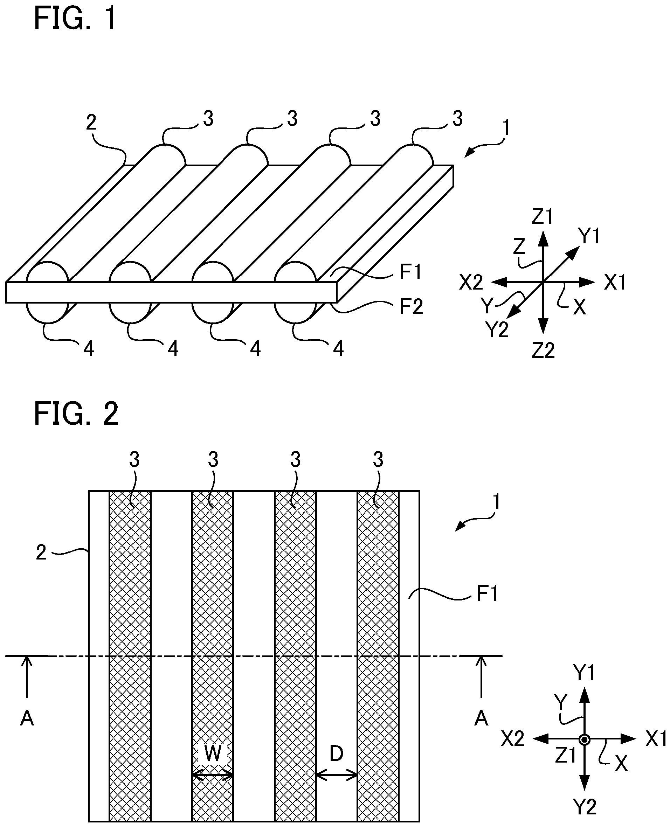

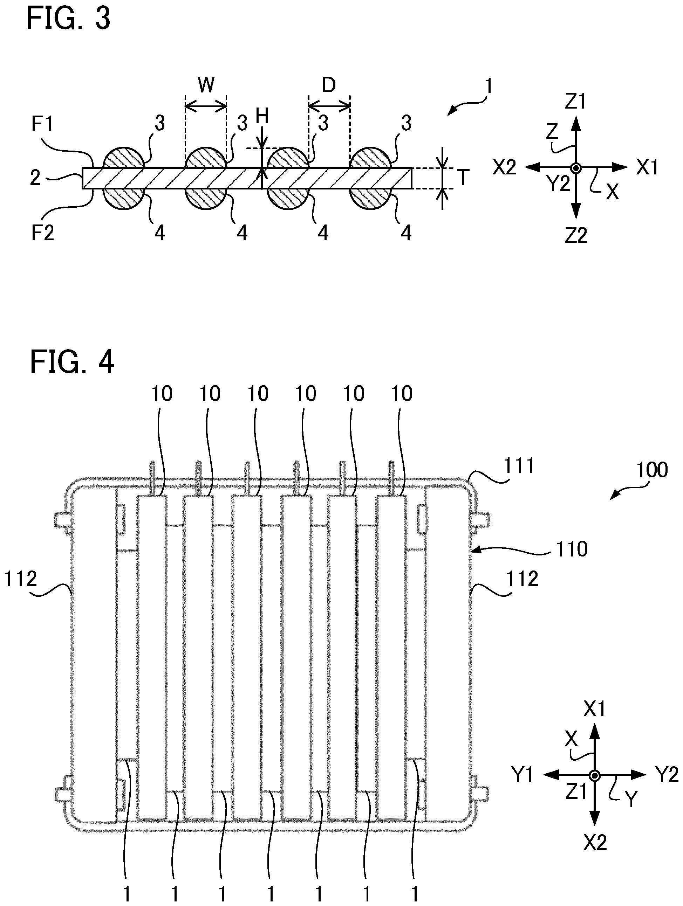

Fig. 1 is a perspective view of a battery-cushioning member 1 according to a first embodiment. Fig. 2 is a plan view of the battery-cushioning member 1 according to the first embodiment. Fig. 3 is a cross-sectional view taken along Line A-A in Fig. 2. In Fig. 2, first elastic bodies 3, which will be described later, are depicted by cross-hatching for ease of viewing.

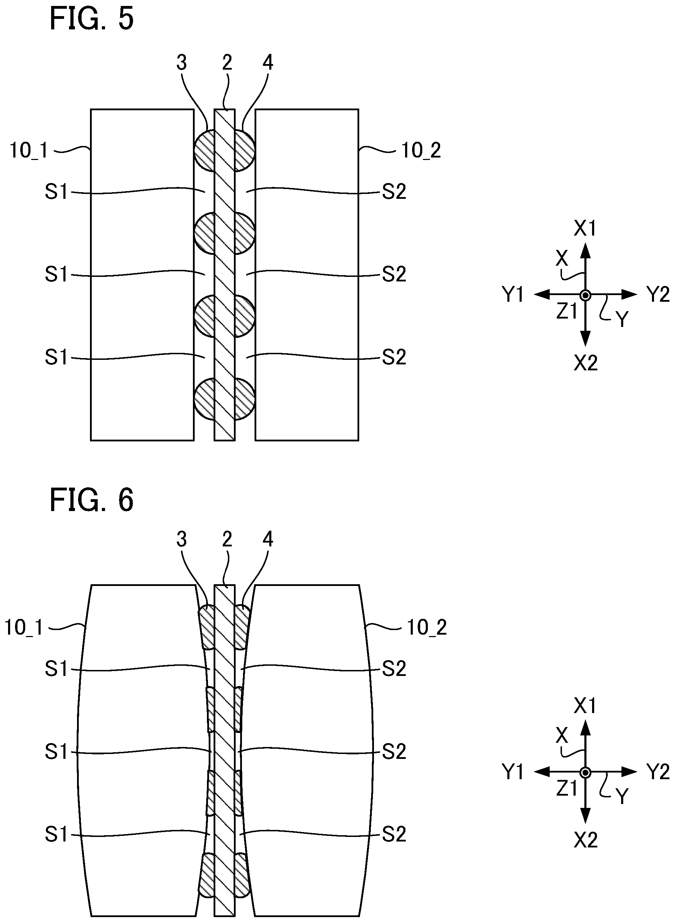

The battery-cushioning member 1 is a sheet or plate-shaped material that is arranged between a plurality of rigid bodies including a first rigid body and a second rigid body of a battery module. The plurality of rigid bodies is one of a battery cell or a casing, for example. The battery module comprises a lithium-ion battery, a nickel-hydrogen battery, or a solid-state battery, for example. A use state of the battery-cushioning member 1 will be explained later with reference to Figs. 4 and 5.

As shown in Figs. 1 to 3, the battery-cushioning member 1 includes a heat insulator 2, a plurality of first elastic bodies 3, and a plurality of second elastic bodies 4. Each element of the battery-cushioning member 1 will now be described in turn.

In the following description, for convenience of explanation, reference is made to orthogonal axes X, Y, and Z. The Z-axis extends parallel to the thickness direction of the battery-cushioning member 1. One direction along the X-axis is an X1 direction and a direction opposite to the X1 direction is an X2 direction. One direction along the Y-axis is a Y1 direction and a direction opposite to the Y1 direction is a Y2 direction. One direction along the Z-axis is a Z1 direction and a direction opposite to the Z1 direction is a Z2 direction. A relationship between the above-described directions and a vertical direction is not particularly limited, and other relationships are applicable. Further, in the following description, a direction viewed along the Z-axis may be referred to as a "plan view."

The heat insulator 2 is a sheet or plate-shaped member that has heat insulating properties. The heat insulator 2 is a material that has higher heat insulation properties than that of a first elastic body 3 or a second elastic body 4. Specifically, the heat insulator 2 is composed of a resin material or an inorganic compound, for example.

The resin material is not particularly limited, and any thermosetting resin or thermoplastic resin may be used. Examples of the thermosetting resin include a phenol resin, an epoxy resin, a melamine resin, a urea resin, an unsaturated polyester resin, an alkyd resin, a silicone resin, a polyurethane, and a thermosetting polyimide. Examples of the thermoplastic resin include a polyethylene, a polypropylene, a polyvinyl chloride, a polyvinylidene chloride, a polystyrene, a polyvinyl acetate, a polyurethane, a polytetrafluoroethylene, an ABS resin, an AS resin, an acrylic resin, a polyamide, a polyacetal, a polycarbonate, a modified polyphenylene ether, a polyester, a polyethylene terephthalate, a polybutylene terephthalate, a cyclic polyolefin, a polyphenylene sulfide, a polysulfone, a polyether sulfone, an amorphous polyarylate, a liquid crystal polymer, a polyether ether ketone, a thermoplastic polyimide, and a polyamide imide. A heat insulator 2 composed of a resin material has an advantage in that it is easier to mold than one made of an inorganic compound.

An inorganic filler may be added to the resin. The inorganic filler may be a silica, a talk, an alumina, etc., but is not limited thereto. Addition of an inorganic filler to the resin is advantageous in that requisite properties such as rigidity for the heat insulator 2 can be more easily attained.

Examples of the inorganic compound include a ceramic, such as a metal oxide, a silicon oxide, a silicon nitride oxide, a silicon nitride, but are not limited thereto. It is advantageous if the heat insulator 2 is composed of an inorganic compound in that requisite properties such as rigidity can be more easily attained, even if the heat insulator 2 is composed of a porous material as described later.

A heat resistant temperature of the heat insulator 2 is preferably 150 °C or higher, more preferably 200 °C or higher, and even more preferably 300 °C or higher. With excellent heat resistance properties, the heat insulator 2 can maintain its function even during instances of an excessive temperature rise.

A thermal conductivity of the heat insulator 2 is preferably 0.1 W/mK or less, more preferably 0.05 W/mK or less, and even more preferably 0.03 W/mK or less. These properties of the heat insulator 2 provide effective thermal insulation.

The heat insulator 2 is preferably composed of a porous material to enhance thermal insulation. The porous material may be a foam or a cloth. Pores of the foam may be interconnected or closed. The cloth may be woven, non-woven, or felted.

In a case in which the heat insulator 2 is composed of a porous material to , for suitably enhance the thermal insulation of the heat insulator 2, its porosity is preferably 50% to 99%, more preferably 70% to 99%, and even more preferably 90% to 99%. When the porous material is composed of an inorganic compound, the porous material may be composed, for example of an aerogel such as silica aerogel or composed of an aerogel and a non-woven cloth, to realize a high porosity.

The heat insulator 2 is preferably more resistant to deformation than the first elastic body 3 or the second elastic body 4. Specifically, a Young's modulus of the heat insulator 2 is preferably higher than that of the first elastic body 3 or the second elastic body 4. Thus, the first elastic body 3 or the second elastic body 4 can suitably elastically deform in conformity with expansion or retraction of the battery cells.

The heat insulator 2 includes a first surface F1 and a second surface F2 that faces in a direction opposite to that of the first surface F1. The heat insulator 2 may have a thickness T of 0.5 mm to 5 mm, although the thickness is not limited thereto.

In the example shown in Figs. 1 and 2, the first surface F1 faces the Z1 direction and the second surface F2 faces the Z2 direction. In plan view, the shape of the heat insulator 2 is a rectangle. Specifically, the heat insulator 2 has a pair of sides extending parallel to the X-axis and a pair of sides extending parallel to the Y-axis. The shape of the heat insulator 2 as seen in plan view varies dependent on the shape of the battery module or the battery cell. The shape is not limited to a rectangle and may be freely selected.

The plurality of first elastic bodies 3 and the plurality of second elastic bodies 4 are formed integrally with the heat insulator 2. The plurality of the first elastic bodies 3 is disposed on the first surface F1 of the heat insulator 2, whereas the plurality of the second elastic bodies 4 is disposed on the second surface F2 of the heat insulator 2. The plurality of the first elastic bodies 3 protrudes in the Z1 direction from the first surface F1 of the heat insulator 2, whereas the plurality of the second elastic bodies 4 protrudes in the Z2 direction from the second surface F2 of the heat insulator 2.

The plurality of the first elastic bodies 3 and the plurality of the second elastic bodies 4 exhibits rubber-like elasticity. The plurality of the first elastic bodies 3 and the plurality of the second elastic bodies 4 are each formed integrally with the heat insulator 2, for example by bonding with vulcanization or by a similar process. Consequently, an adhesive is not required for bonding the plurality of the first elastic bodies 3 and the plurality of the second elastic bodies 4 to the heat insulator 2.

However, the plurality of the first elastic bodies 3 and the plurality of the second elastic bodies 4 may each be joined to the heat insulator 2 by use of an adhesive or another medium. The phrase "the elastic body is formed integrally with the heat insulator 2" means:
A: the heat insulator 2 and the elastic body are composed of the same material as each other, and are formed integrally with each other without any bonding interface;
B: the heat insulator 2 and the elastic body are bonded together using vulcanization without use of an adhesive; or
C: the heat insulator 2 and the elastic body are bonded together using an adhesive.

The plurality of the first elastic bodies 3 and the second elastic bodies 4 are each composed of an elastic material that has a lower Young's modulus than the heat insulator 2. Specifically, the plurality of the first elastic bodies 3 and the second elastic bodies 4 is each composed of an elastomeric material, for example. The plurality of the first elastic bodies 3 and the second elastic bodies 4 are each formed integrally with the heat insulator 2, for example, by use of insert molding, with the heat insulator 2 being used as an insert part.

An elastomeric material used for forming each of the plurality of the first elastic bodies 3 and the plurality of second elastic bodies 4 should have requisite elasticity and heat-resisting properties. Examples of the elastomeric material include, but are not limited to, a thermosetting elastomer such as an isoprene rubber, a butadiene rubber, a styrene butadiene rubber, a butadiene rubber, a chloroprene rubber, a nitrile rubber, a butyl rubber, an ethylene propylene rubber, a chloro-sulfonated polyethylene, an acrylic rubber, a fluorocarbon rubber, an epichlorohydrin rubber, a urethane rubber, a silicone rubber, etc., or an thermoplastic elastomer such as a polystyrene system, an olefinic/ alkene system, a polyvinyl chloride system, a polyurethane system, a polyester system, a polyamide system, etc. Among these, use of a silicone rubber is preferable in view of heat-resistant performance. The elastomeric material may have an inorganic filler added. The inorganic filler may be a silica, a talk, an alumina, etc., for example, but are not limited thereto.

The plurality of the first elastic bodies 3 and the second elastic bodies 4 may be composed of a different material from each other. However, in view of restraining a cost of the battery-cushioning member 1, the plurality of the first elastic bodies 3 and the plurality of the second elastic bodies 4 are preferably made from the same material.

The plurality of the first elastic bodies 3 and the second elastic bodies 4 may be composed of a dense material or a porous material. In a case in which one or both of the plurality of the first elastic bodies 3 or the second elastic bodies 4 is composed of a porous material, thermal insulation of the battery-cushioning member 1 can be enhanced as compared with a case in which both the plurality of the first elastic bodies 3 and the second elastic bodies 4 are composed of a dense material. Pores of the porous material may be interconnected or closed.

As shown in Figs. 1 and 2, in plan view the plurality of the first elastic bodies 3 extend linearly in the direction along the Y-axis. The plurality of the first elastic bodies 3 is arranged parallel to and spaced apart from each other by a distance D in the direction along the X-axis.

In the example shown in Figs. 1 to 3, widths W each of the plurality of the first elastic bodies 3 are equal to each other and remain constant over their entire lengths. Further, the plurality of the first elastic bodies 3 is arranged to be equispaced in the direction along the X-axis, and the distance D between adjacent two of the plurality of the first elastic bodies 3 remains constant over their entire lengths. The width W or the distance D need not be constant over the entire lengths of the plurality of the first elastic bodies 3, and the plurality of the first elastic bodies 3 may each extend in the direction along the Y-axis or in a direction oblique to the X-axis.

The width W of the plurality of the first elastic bodies 3 is preferably 0.5 times to 1.5 times the distance D, although the width W is not limited thereto. Such a configuration prevents the heat insulator 2 and the battery cells from coming into contact with each other, while enabling requisite elastic deformation of each of the plurality of the first elastic bodies 3 in the direction along the Z-axis. In a case in which the width W is insufficient, depending on a height H of any one of the plurality of the first elastic bodies 3 protruding from the first surface F1, the any one of the plurality of the first elastic bodies 3 may bend upon deformation. If such bending occurs, a space S1 (described later) created between the heat insulator 2 and the battery cell may be lost. On the other hand, in a case in which the width W is excessive, the space S1 created between the heat insulator 2 and the battery cell may be reduced, thereby compromising a function provided by the space S1.

The height H of the plurality of the first elastic bodies 3 is preferably equal to or greater than 0.5 times to equal to or less than 1.5 times of the width W, although not limited thereto in particular. By this configuration, the plurality of the first elastic bodies 3 can be deformed elastically by a sufficient amount in the direction along the Z-axis. However, in a case in which the height H is insufficient, depending on a material of which the plurality of the first elastic bodies 3 is composed or a shape of the plurality of the first elastic bodies 3, an amount of deformation of the plurality of the first elastic bodies 3 in the direction along the Z-axis may not be sufficient. **In** a case in which a height H of any one of the plurality of the first elastic bodies 3 is excessive, the any one of the plurality of the first elastic bodies 3 bends upon deformation, and as a result, the space S1 created between the heat insulator 2 and the battery cell may not be able to be maintained.

**In** the present embodiment, the plurality of the first elastic bodies 3 reduce in width in the Z1 direction i.e., in the direction away from the heat insulator 2. **In** other words, the width of a second portion of the plurality of the first elastic bodies 3 is narrower than that of a first portion of the plurality of the first elastic bodies 3, provided that the first portion is a portion of the first elastic body 3 in a direction of the height, and the second portion is another portion of the first elastic body 3 that is more distant from the heat insulator 2 in the direction of the height than the first portion. **In** other words, the first elastic body 3 includes the first portion and the second portion. **In** an example as shown in Figs. 1 and 3, the cross-sectional shape of the first elastic body 3 is semicircular. The cross-sectional shape of the first elastic body 3 is not limited to the example shown in Figs. 1 and 3, and may be that shown in the second to the fifth embodiments described later. The plurality of first elastic bodies 3 may have the same cross-sectional shape as each other.

The plurality of second elastic bodies 4 is configured in substantially the same manner as the plurality of first elastic bodies 3, except that they are joined to the second surface F2 of the heat insulator 2. In the example as shown in Figs. 1 to 3, the plurality of the second elastic bodies 4 is symmetrical with the plurality of the first elastic bodies 3 relative to the heat insulator 2. In plan view, each of the plurality of the second elastic bodies 4 extends linearly in the direction along the Y-axis. The plurality of the second elastic bodies 4 is disposed parallel to and spaced apart from each other by a distance D in the direction along the X-axis. In plan view, every one of the plurality of the second elastic bodies 4 overlaps with a corresponding one of the plurality of the first elastic bodies 3.

The plurality of the second elastic bodies 4 may have a different configuration to that of the plurality of the first elastic bodies 3. The plurality of the second elastic bodies 4 may be asymmetrical to the plurality of first elastic bodies 3 relative to the heat insulator 2. The plurality of the first elastic bodies 3 and the second elastic bodies 4 may differ with respect to at least one of the following: number, shape, width, height, distance between adjacent first or second elastic bodies, and arrangement. The plurality of the second elastic bodies 4 may each extend in the direction along the X-axis, or in a direction oblique to the Y-axis. In a case in which a direction in which each of the plurality of the first elastic bodies 3 extends is the same as a direction in which each of the plurality of the second elastic bodies 4 extends, in plan view the plurality of the first elastic bodies 3 and the plurality of the second elastic bodies 4 may be arranged without overlapping each other.

To facilitate easier design of the battery-cushioning member 1, the plurality of the second elastic bodies 4 is preferably configured in substantially the same manner as the plurality of the first elastic bodies 3, and more preferably, the plurality of the second elastic bodies 4 is symmetrical with the plurality of the first elastic bodies 3 relative to the heat insulator 2.

### 1-2. Action of Battery-Cushioning Member

Fig. 4 is a drawing showing a battery 100, which is an example of a battery including the battery-cushioning members 1. Fig. 5 is a drawing showing an example use state of the battery-cushioning member 1 according to the first embodiment. Fig. 6 is a drawing for explaining an action of the battery-cushioning member according to the first embodiment.

As shown in Fig. 4, the battery 100 includes a restrainer 110, a plurality of battery cells 10 (an example of "first rigid bodies" and "second rigid bodies"), and a plurality of battery-cushioning members 1.

The restrainer 110 includes a casing 111, and a pair of lids 112. The pair of lids 112 is an example of the "first rigid bodies" and "second rigid bodies." The casing 111 is made from a metal, for example and is of a cylindrical shape, both ends of which are open. The casing 111 contains alternately stacked battery cells 10 and battery-cushioning members 1. The pair of lids 112 is made from a metal, for example, and one each is disposed on an end each of the casing 111 to close the openings at each end of the casing 111. The lids 112 are fixed to the casing 111 with set screws. The stacked battery cells 10 and battery-cushioning members 1 are interposed between the pair of lids 112 in an urged condition under a predetermined pressure. The battery cells 10 are stacked in a direction along the central axis of the casing 111 and one each of the battery-cushioning members 1 is interposed between two adjacent battery cells 10. One of the battery-cushioning members 1 is also interposed between the battery cell 10 and the lid 112.

Fig. 5 shows the battery-cushioning member 1 disposed between battery cells 10_1 and 10_2. Each of the battery cells 10_1 and 10_2 corresponds to the battery cell 10 shown in Fig. 4. The plurality of the first elastic bodies 3 is each in contact with the battery cell 10_1, i.e., "the first rigid body," and each of the plurality of the second elastic bodies 4 is in contact with the battery cell 10_2, i.e., "the second rigid body." Fig. 5 shows a condition in which each of the battery cells 10_1 and 10_2 is in its normal contracted state.

In the condition shown in Fig. 5, the spaces S1 are created between the battery-cushioning member 1 and the battery cell 10_1, and between the battery-cushioning member 1 and the battery cell 10_2. The spaces S1 are created between the heat insulator 2 and the battery cell 10_1 due to the spacing between the plurality of the first elastic bodies 3. The spaces S2 are created between the heat insulator 2 and the battery cell 10_2 due to the spacing between the plurality of the second elastic bodies 4.

The spaces S1 and S2 serve as heat insulators. Accordingly, it is possible to reduce by way of the spaces S1 and S2 heat transfer between the battery cell 10_1 and the battery cell 10_2. The spaces S1 and S2 can also each function as a ventilation passage. Consequently, a temperature rise of the battery cells 10_1 and 10_2 can be reduced.

In a case in which one or both of the battery cells 10_1 and 10_2 expand for some reason, the plurality of the first elastic bodies 3 or the plurality of the second elastic bodies 4, or both the plurality of the first elastic bodies 3 and the plurality of the second elastic bodies 4 will deform elastically as shown in Fig. 6. The battery cells 10_1 and 10_2 are shown in an expanded state in Fig. 6.

Even in a condition as shown in Fig. 6, the spaces S1 and S2 described above are maintained to an extent. Thus, the spaces S1 and S2 serve as heat insulators as well as ventilation passages. Even if the spaces S1 and S2 are lost, heat transfer from one to the other of the battery cell 10_1 and the battery cell 10_2 can still be reduced by the thermal insulation of the heat insulator 2.

As described above, the battery-cushioning members 1 are disposed between the plurality of battery cells 10. Each of the battery-cushioning member 1 includes a sheet-shaped heat insulator (heat insulation member) 2 and at least one of the plurality of the first elastic bodies 3. The heat insulator 2 includes a first surface F1 and a second surface F2 that faces in a direction opposite to that of the first surface F1. The at least one of the plurality of the first elastic bodies 3 is disposed on the first surface F1, and is formed integrally with the heat insulator 2, creating a partial space S1 between the first surface F1 and the battery cell 10.

In the battery-cushioning member 1, the plurality of the first elastic bodies 3 is disposed on the first surface F1 of the heat insulator 2. Therefore, in instances of expansion of the battery cell 10, the plurality of the first elastic bodies 3 elastically deform in response to the expansion of the battery cells 10. By interposing the plurality of the first elastic bodies 3 between the battery cells 10 and the heat insulator 2, it is possible to control the expansion of the battery cells 10 within a predetermined range by coordination between the heat insulator 2 and the plurality of the first elastic bodies 3. As a result, excessive expansion of the battery cells 10 can be suppressed and rupture of the battery cells 10 can be prevented. Consequently, deterioration of the battery cells 10 due to repeated expansion and contraction can be reduced.

Since the plurality of the first elastic bodies 3 creates the partial spaces S1 between the first surface F1 of the heat insulator 2 and the battery cells 10, heat transfer between the battery cells 10 can be reduced by the thermal insulation of the spaces S1 in conjunction with the thermal insulation of the heat insulator 2. As a result, it possible to prevent thermal runaway in the battery cells 10, which may otherwise occur due to an exothermic reaction in one of the battery cells 10 resultant from an exothermic reaction in another of the battery cells 10.

Moreover, use of the heat insulator 2 can reduce heat transfer between the battery cells 10 through the thermal insulation of the heat insulator 2 even in a case in which the spaces S1 are reduced or lost due to elastic deformation of the plurality of the first elastic bodies 3.

Since the plurality of the first elastic bodies 3 and the heat insulator 2 are formed integrally, the action of the heat insulator 2 and the plurality of the first elastic bodies 3 can be stably maintained even when expansion and contraction of the battery cells 10 occurs repeatedly.

In the present embodiment, not only the plurality of the first elastic bodies 3 but also the plurality of the second elastic bodies 4 are disposed on the heat insulator 2. In other words, the battery-cushioning member 1 includes at least one second elastic body 4. Further, the at least one second elastic body 4 is disposed on the second surface F2 and formed integrally with the heat insulator 2, to provide a partial space S2 between the second surface F2 and the battery cells 10.

Accordingly, effects of reducing deterioration and preventing thermal runaway of the battery cells 10 can further be enhanced as compared with a configuration that includes only the plurality of the first elastic bodies 3. By use of both the plurality of the first elastic bodies 3 and the plurality of the second elastic bodies 4, even when the effects of one of the plurality of the first elastic bodies 3 or the plurality of the second elastic bodies 4 are reduced for some reason, the effects of the other of the plurality of the first elastic bodies 3 or the plurality of the second elastic bodies 4 can be exerted. Therefore, deterioration of the battery cells 10 can be suppressed and thermal runaway of the battery cells 10 can be prevented.

In the present embodiment, the plurality of the second elastic bodies 4 is configured in substantially the same way as the plurality of the first elastic bodies 3, as result of which the plurality of the second elastic bodies 4 acts in substantially the same manner as that of the plurality of the first elastic bodies 3. The shape of the plurality of the second elastic bodies 4 may differ from that of the plurality of the first elastic bodies 3. In plan view, at least a part of the plurality of the second elastic bodies 4 may not overlap the plurality of the first elastic bodies 3.

The battery-cushioning member 1 is provided with the plurality of the first elastic bodies 3 that are disposed spaced apart from each other in the direction of thickness of the heat insulator 2, as described above. Accordingly, the spaces S1 that serve as ventilation passages are created between the plurality of the first elastic bodies 3. As a result, a temperature rise of the battery cells 10 can be adequately reduced. In the present embodiment, the temperature rise of the battery cell 10 can also be adequately reduced by the spaces S2 created between the plurality of the plurality of the second elastic bodies 4, since the plurality of the second elastic bodies 4 are configured in substantially the same way as the plurality of the first elastic bodies 3.

In the present embodiment, as described above, each of the plurality of the first elastic bodies 3 extends linearly viewed in the thickness direction of the heat insulator 2, and the plurality of the first elastic bodies 3 is arranged parallel to each other. Consequently, since the spaces S1 between the plurality of the first elastic bodies 3 also extend linearly, heat can be dissipated from the battery cell 10 in a desired direction. In the present embodiment, since the plurality of the second elastic bodies 4 is configured in substantially the same way as the plurality of the first elastic bodies 3, temperature rise in the battery cells 10 can be adequately reduced via the spaces S2 created between the plurality of the second elastic bodies 4.

As described above, each one of the plurality of the first elastic bodies 3 reduces in width in a direction away from the heat insulator 2. Therefore, while ensuring requisite rigidity for the plurality of the first elastic bodies 3, the contact area between the plurality of the first elastic bodies 3 and the battery cells 10 can be reduced. As a result, heat transfer from the battery cells 10 to the plurality of the first elastic bodies 3 can be reduced. In the present embodiment, heat transfer from the battery cells 10 to the plurality of the second elastic bodies 4 can also be reduced, since the plurality of the second elastic bodies 4 is configured in substantially the same way as the plurality of the first elastic bodies 3.

Moreover, as described above, the Young's modulus of the heat insulator 2 is higher than that of the plurality of the first elastic bodies 3. Therefore, the plurality of the first elastic bodies 3 can be suitably elastically deformed in conjunction with expansion of the battery cells 10 while maintaining thermal insulation of the heat insulator 2. In the present embodiment, the plurality of the second elastic bodies 4 suitably elastically deforms in conjunction with expansion of the battery cells 10, since the plurality of the second elastic bodies 4 is configured in substantially the same way as the plurality of the first elastic bodies 3.

As described above, when the heat insulator 2 is composed of a resin or a ceramic material, an advantage is obtained in that it is easier to enhance thermal insulation of the heat insulator 2 as compared with a case in which a different material is used. In a case in which the heat insulator 2 is composed of a resin material, a degree of freedom in the shape of the heat insulator 2 can be enhanced compared with a configuration in which a ceramic material is used.

Further, as described above, in a case in which the heat insulator 2 is composed of a porous material, thermal insulation of the heat insulator 2 can be enhanced compared with a case in which the heat insulator 2 is composed of a dense material.

Further, as described above, the plurality of the first elastic bodies 3 is composed of an elastomeric material. Therefore, a suitable elasticity of the first elastic bodies 3 can be attained. In the present embodiment, since the plurality of the second elastic bodies 4 is configured in substantially the same way as the plurality of the first elastic bodies 3, the plurality of the second elastic bodies 4 also have sufficient elasticity.

### 2. Second Embodiment

A second embodiment of the present disclosure will now be described. In the modes exemplified below, elements having functions substantially the same as those of the first embodiment are denoted by reference signs used in the description of the first embodiment, and detailed explanation thereof is omitted as appropriate.

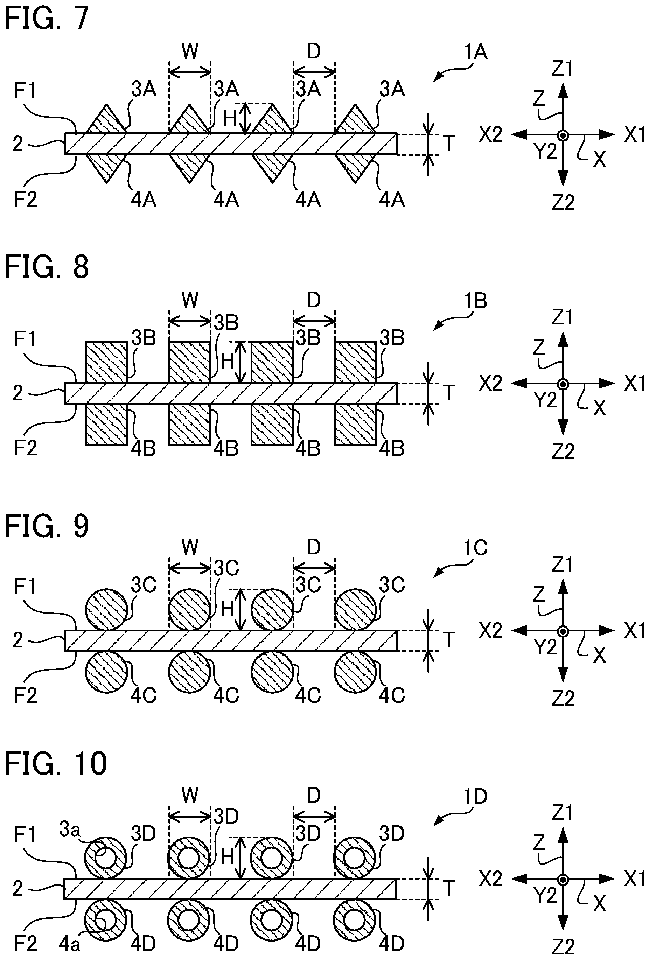

Fig. 7 is a cross-sectional view of a battery-cushioning member 1A according to a second embodiment. The battery-cushioning member 1A is configured in substantially the same way as the above-described battery-cushioning member 1 of the first embodiment, with the exception that a plurality of the first elastic bodies 3A and a plurality of the second elastic bodies 4A are substituted for the plurality of the first elastic bodies 3 and the plurality of the second elastic bodies 4.

The plurality of the first elastic bodies 3A is configured in substantially the same way as the plurality of the first elastic bodies 3 of the first embodiment, with the exception that cross-sectional shapes of the plurality of the first elastic bodies 3A are different from those of the plurality of the first elastic bodies 3. In an example shown in Fig. 7, the cross-sectional shape each of the plurality of the first elastic bodies 3A is a triangle. The plurality of the first elastic bodies 3A has a shape that is reduced in width in a direction away from the heat insulator 2. The contact area of the plurality of the first elastic bodies 3A with the battery cells 10 can be reduced while ensuring requisite rigidity of the plurality of the first elastic bodies 3A.

The plurality of the second elastic bodies 4A is configured in substantially the same way as the plurality of the second elastic bodies 4 of the first embodiment, with the exception that cross-sectional shapes of the plurality of the second elastic bodies 4A are different from those of the plurality of the second elastic bodies 4. In the example shown in Fig. 7, the plurality of the second elastic bodies 4A is configured to be symmetrical with the plurality of the first elastic bodies 3A relative to the heat insulator 2. The cross-sectional shape each of the plurality of the second elastic bodies 4A is a triangle. The plurality of the second elastic bodies 4A each has a shape that is reduced in width in a direction away from the heat insulator 2. The contact area of the plurality of the second elastic bodies 4A with the battery cell 10 can be reduced while ensuring requisite rigidity of the plurality of the second elastic bodies 4A.

The thermal insulation between the battery cells 10 can also be sufficiently enhanced also according to the second embodiment. As described above, the cross-sectional shape of each of the plurality of the first elastic bodies 3A and each of the plurality of the second elastic bodies 4A is a triangle. Thus, compared with the configuration of the first embodiment, volumes of the space S1 and S2 can be increased even when the distance D is reduced. As a result, the thermal insulation of the battery-cushioning member 1A can be enhanced.

### 3. Third Embodiment

A third embodiment of the present disclosure will now be described. In the modes exemplified below, elements having functions substantially the same as those of the first embodiment are denoted by reference signs used in the description of the first embodiment, and detailed explanation thereof is omitted as appropriate.

Fig. 8 is a cross-sectional view of a battery-cushioning member 1B of the third embodiment. The battery-cushioning member 1B is configured substantially the same as the above-described battery-cushioning member 1 of the first embodiment with the exception that a plurality of first elastic bodies 3B and a plurality of second elastic bodies 4B are substituted for the plurality of the first elastic bodies 3 and the plurality of the second elastic bodies 4.

The plurality of the first elastic bodies 3B is configured in substantially the same way as the plurality of the first elastic bodies 3 of the first embodiment, with the exception that cross-sectional shapes of the plurality of the first elastic bodies 3B are different from those of the plurality of the first elastic bodies 3. In the example shown in Fig. 8, the cross-sectional shape of each of the plurality of the first elastic bodies 3B is a rectangle. The plurality of the first elastic bodies 3B has a shape with a constant width in the thickness direction of the heat insulator 2.

The plurality of the second elastic bodies 4B is configured in substantially the same way as the plurality of second elastic bodies 4 of the first embodiment, with the exception that cross-sectional shapes of the plurality of the second elastic bodies 4B are different from those of the plurality of the second elastic bodies 4. In the example shown in Fig. 8, the plurality of the second elastic bodies 4B is configured to be symmetrical with the plurality of the first elastic bodies 3B relative to the heat insulator 2. The cross-sectional shapes of each of the plurality of the second elastic bodies 4B is a rectangle.

The thermal insulation between the battery cells 10 can also be suitably enhanced in the third embodiment. As described above, a cross-sectional shape of each of the plurality of the first elastic bodies 3B and each of the plurality of the second elastic bodies 4B is a rectangle. Thus, compared with a configuration of the first embodiment or a configuration of the second embodiment, an advantage is obtained in that a stable, repeated elastic deformation of each of the plurality of the first elastic bodies 3B and each of the plurality of the second elastic bodies 4B can be facilitated even when the ratio of the height H relative to the width W (H/W) of each elastic body is increased.

### 4. Fourth Embodiment

A fourth embodiment of the present disclosure will now be described. In the modes exemplified below, elements having functions substantially the same as those of the first embodiment are denoted by reference signs used in the description of the first embodiment, and detailed explanation thereof is omitted as appropriate.

Fig. 9 is a cross-sectional view of the battery-cushioning member 1C of the fourth embodiment. The battery-cushioning member 1C is configured in substantially the same way as the above-described battery-cushioning member 1 of the first embodiment, with the exception that a plurality of first elastic bodies 3C and a plurality of second elastic bodies 4C are substituted for the plurality of the first elastic bodies 3 and the plurality of the second elastic bodies 4.

The plurality of the first elastic bodies 3C is configured in substantially the same way as the plurality of the first elastic bodies 3 of the first embodiment, with the exception that cross-sectional shapes of plurality of the first elastic bodies 3C are different from those of the plurality of the first elastic bodies 3. In the example shown in Fig. 9, the cross-sectional shape of each of the plurality of first elastic bodies 3C is circular.

The plurality of the second elastic bodies 4C is configured in substantially the same way as the plurality of the second elastic bodies 4 of the first embodiment, with the exception that cross-sectional shapes of the plurality of the second elastic bodies 4C are different from those of the plurality of the second elastic bodies 4. In the example shown in Fig. 9, the plurality of second elastic bodies 4C is configured to be symmetrical with the plurality of the first elastic bodies 3C relative to the heat insulator 2. The cross-sectional shape of each of the plurality of the second elastic bodies 4C is circular.

Thermal insulation between the battery cells 10 can also be suitably enhanced in the fourth embodiment. As described above, the cross-sectional shape of each of the plurality of the first elastic bodies 3C and each of the plurality of the second elastic bodies 4C is circular. Thus, compared with each of the corresponding configurations of the first to third embodiments, the contact area each of the plurality of the first elastic bodies 3C and the plurality of the second elastic bodies 4C with the heat insulator 2 can be reduced. As a result, the thermal insulation of the battery-cushioning member 1C can be enhanced.

### 5. Fifth Embodiment

A fifth embodiment of the present disclosure will now be described. In the modes exemplified below, elements having functions substantially the same as those of the first embodiment are denoted by reference signs used in the description of the first embodiment, and detailed explanation thereof is omitted as appropriate.

Fig. 10 is a cross-sectional view of the battery-cushioning member 1D of the fifth embodiment. The battery-cushioning member 1D is configured in substantially the same as the above-described battery-cushioning member 1 of the first embodiment, with the exception that a plurality of first elastic bodies 3D and a plurality of second elastic bodies 4D are substituted for the plurality of the first elastic bodies 3 and the plurality of the second elastic bodies 4.

The plurality of the first elastic bodies 3D is configured in substantially the same way as the plurality of plurality of the first elastic bodies 3 of the first embodiment, with the exception that cross-sectional shapes of the plurality of the first elastic bodies 3D are different from those of the plurality of the first elastic bodies 3. In the example as shown in Fig. 10, the cross-sectional shape of each of the plurality of first elastic bodies 3D is annular. In other words, each of the plurality of the first elastic bodies 3D is cylindrical in shape and has a hollow portion 3a. The hollow portion 3a is a hole provided longitudinally over the entire length each of plurality of the first elastic bodies 3D.

The plurality of the second elastic bodies 4D is configured in substantially the same way as the plurality of second elastic bodies 4 of the first embodiment, with the exception that cross-sectional shapes of the second elastic bodies 4D are different from those of plurality of the second elastic bodies 4. In the example shown in Fig. 10, the plurality of the second elastic bodies 4D is configured to be symmetrical with the plurality of the first elastic bodies 3D relative to the heat insulator 2. The cross-sectional shape of each of the plurality of the second elastic bodies 4D is annular. In other words, each of the plurality of the second elastic bodies 4D has a cylindrical shape with a hollow portion 4a. The hollow portion 4a is a hole provided longitudinally over the entire length each of the plurality of the second elastic bodies 4D.

Thermal insulation between the battery cells 10 can also be suitably enhanced in the fifth embodiment. The contact area of each of the plurality of the first elastic bodies 3D and the plurality of the second elastic bodies 4D with the heat insulator 2 can be reduced in substantially the same manner as in the fourth embodiment. Therefore, thermal insulation of the battery-cushioning member 1D can be enhanced. As described above, the plurality of the first elastic bodies 3D each has a hollow portion 3a and the plurality of the second elastic bodies 4D each has a hollow portion 4a. As a result, thermal insulation of the plurality of the first elastic bodies 3D and the plurality of the second elastic bodies 4D can be enhanced as compared to those without hollow portions. Further, since the hollow portions 3a extend in a direction orthogonal to the thickness direction of the heat insulator 2, elastic deformation in the thickness direction of the plurality of the first elastic bodies 3D can be facilitated. Similarly, since the hollow portions 4a extend in a direction orthogonal to the thickness direction of the heat insulator 2, elastic deformation in the thickness direction of the second elastic bodies 4D can be facilitated.

### 6. Sixth Embodiment

A sixth embodiment of the present disclosure will now be described. In the modes exemplified below, elements having functions substantially the same as those of the first embodiment are denoted by reference signs used in the description of the first embodiment, and detailed explanation thereof is omitted as appropriate.

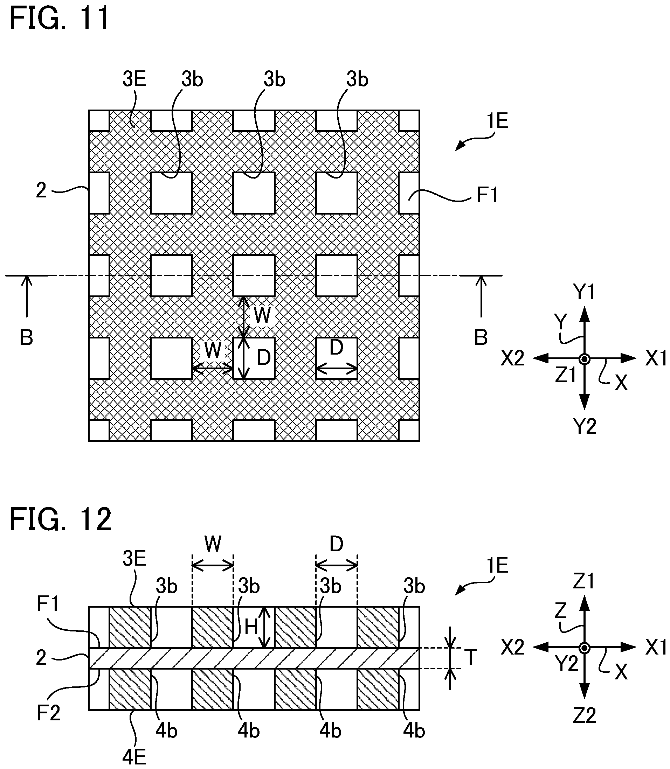

Fig. 11 is a plan view of a battery-cushioning member 1E according to a sixth embodiment. Fig. 12 is a cross-sectional view taken along Line B-B line in Fig. 11. The battery-cushioning member 1E is configured in substantially the same way as the battery-cushioning member 1 of the first embodiment, with the exception that a first elastic body 3E and a second elastic body 4E are substituted for the plurality of the first elastic bodies 3 and the plurality of the second elastic bodies 4.

The first elastic body 3E is configured substantially the same way as the plurality of first elastic bodies 3 of the first embodiment, with the exception that in plan view, a shape of the first elastic body 3E is different from that each of the plurality of the first elastic bodies 3. In the example shown in Figs. 11 and 12, in plan view the first elastic body 3E comprises a lattice. In plan view, the first elastic body 3E has multiple portions extending in the direction of the X-axis, and multiple portions extending in the direction of the Y-axis and intersecting the portions extending in the direction of the X-axis. In other words, in plan view the first elastic body 3E has a plurality of holes 3b arranged in a matrix. In plan view, each of the plurality of holes 3b is a rectangle. The shapes of the holes 3b in plan view are not limited to a rectangular shape, and any polygonal shape other than a rectangle may be used. A circular or elliptical shape may also be used. In plan view, the shape of the first elastic body 3E is not limited to a lattice. For example, a honeycomb configuration may be used.

The second elastic body 4E is configured in substantially the same way as the plurality of the second elastic bodies 4 of the first embodiment, with the exception that, in plan view, a shape of the second elastic body 4E is different from that each of the plurality of the second elastic bodies 4. In the example shown in Figs. 11 and 12, the second elastic body 4E is configured to be symmetrical with the first elastic body 3E with respect to the heat insulator 2. In plan view, the second elastic body 4E comprises a lattice. In plan view, the second elastic body 4E has multiple portions extending in the direction of the X-axis, and multiple portions extending in the direction of the Y-axis and intersecting the portions extending in the direction of the X-axis. In other words, in plan view the second elastic body 4E has a plurality of holes 4b arranged in a matrix. In plan view, the plurality of holes 4b is each rectangular. In plan view, the shapes of the holes 4b are not limited to being rectangular. Any polygonal shape other than a rectangle may be used. A circular or elliptical shape may also be used. In plan view, the shape of the second elastic body 4E is not limited to a lattice. For example, a honeycomb configuration can be used. In plan view, a shape of the second elastic body 4E may be different from that of the first elastic body 3E.

Thermal insulation between the battery cells 10 can be also suitably enhanced by the above-described sixth embodiment. As described above, each of the first elastic body 3E and the second elastic body 4E comprises a lattice, when viewed in the thickness direction of the heat insulator 2. As a result, the first elastic body 3E and the second elastic body 4E can be configured such that it is difficult to detach them from the heat insulator 2.

### 7. Seventh Embodiment

A seventh embodiment of the present disclosure will now be described. **In** the modes exemplified below, elements having functions substantially the same as those of the first embodiment are denoted by reference signs used in the description of the first embodiment, and detailed explanation thereof is omitted as appropriate.

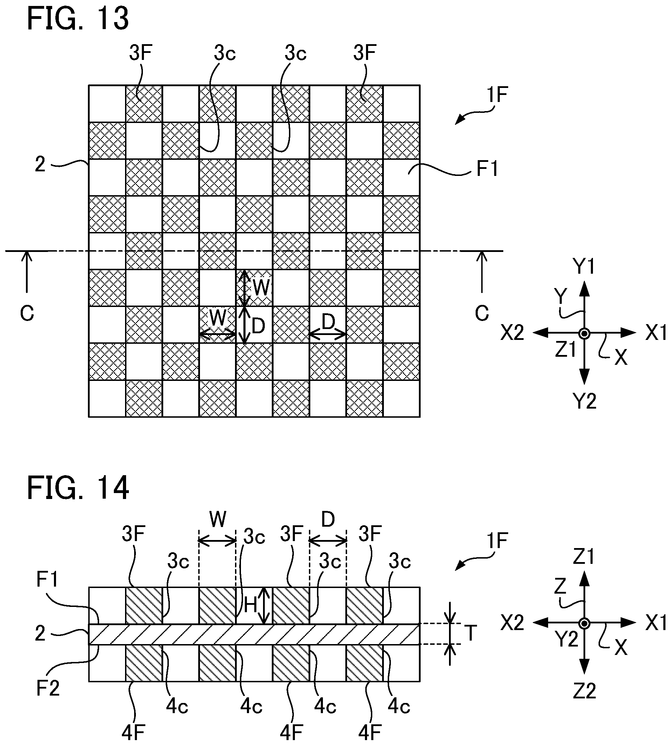

Fig. 13 is a plan view of a battery-cushioning member 1F according to a seventh embodiment. Fig. 14 is a cross-sectional view taken along Line C-C in Fig. 13. The battery-cushioning member 1F is configured in substantially the same way as the battery-cushioning member 1 of the first embodiment, with the exception that a plurality of first elastic bodies 3F and a plurality of second elastic bodies 4F are substituted for the plurality of the first elastic bodies 3 and the plurality of the second elastic bodies 4.

The plurality of the first elastic bodies 3F is configured in substantially the same way as the plurality of the first elastic bodies 3 of the first embodiment, with the exception that, in plan view, a shape each of the plurality of the first elastic bodies 3F is different from that each of the plurality of the first elastic bodies 3. In the example shown in Figs. 13 and 14, in plan view, the plurality of the first elastic bodies 3F is arranged in regular alternating format along each of the X-axis and the Y-axis. In plan view, the shape each of the plurality of the first elastic bodies 3F is a rectangle including a pair of sides extending along the X-axis and a pair of sides extending along the Y-axis. A plurality of holes 3c is formed between the plurality of the first elastic bodies 3F. Each hole 3c is defined by four first elastic bodies 3F. In plan view, the shape of the first elastic body 3F is not limited to a rectangle. The shape of the first elastic body 3F may be polygonal other than rectangular, or may be a star-shaped polygonal. Further, any one of the plurality of the first elastic bodies 3F need not be in contact with any other the plurality of the first elastic bodies 3F.

The plurality of the second elastic bodies 4F is configured in substantially the same way as the plurality of the plurality of the second elastic bodies 4 of the first embodiment, with the exception that, in plan view, a shape each of the plurality of the second elastic bodies 4F is different from that each of the plurality of the second elastic bodies 4. In the example shown in Figs. 13 and 14, the plurality of second elastic bodies 4F is configured to be symmetrical with the plurality of first elastic bodies 3F relative to the heat insulator 2. In plan view, the plurality of the second elastic bodies 4F is arranged alternately and regularly along each of the X-axis and the Y-axis. In plan view, a shape of every second one of the plurality of the elastic bodies 4F is a rectangle including a pair of sides extending along the X-axis and a pair of sides extending along the Y-axis. A plurality of holes 4c is formed between the plurality of the second elastic bodies 4F. Each hole 4c is defined by four of the plurality of the second elastic bodies 4F. In plan view, the shape of the hole 4c is not limited to being rectangular. The shape of the hole 4c may be polygonal other than rectangular, or may be a star-shaped polygonal. In plan view, the plurality of the second elastic bodies 4F may differ from those of the plurality of the first elastic bodies 3F.

Thermal insulation between the battery cells 10 can also be suitably enhanced in the above described seventh embodiment.

### 8. Eighth Embodiment

An eighth embodiment of the present disclosure will now be described. In the modes exemplified below, elements having functions substantially the same as those of the first embodiment are denoted by reference signs used in the description of the first embodiment, and detailed explanation thereof is omitted as appropriate.

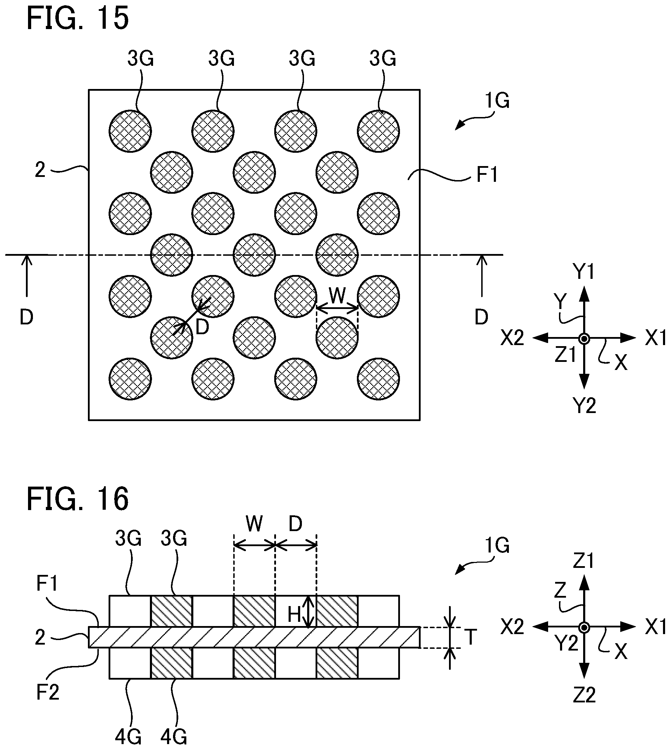

Fig. 15 is a plan view of a battery-cushioning member 1G according to an eighth embodiment. Fig. 16 is a cross-sectional view taken along Line D-D in Fig. 15. The battery-cushioning member 1G is configured in substantially the same way as the above-described battery-cushioning member 1 of the first embodiment, with the exception that a plurality of first elastic bodies 3G and a plurality of second elastic bodies 4G are substituted for the plurality of the first elastic bodies 3 and the plurality of the second elastic bodies 4.

The plurality of the first elastic bodies 3G is configured in substantially the same way as the plurality of the plurality of the first elastic bodies 3 of the first embodiment, with the exception that, in plan view, a shape each of the plurality of the first elastic bodies 3G is different from that each of the plurality of the first elastic bodies 3. In the example shown in Figs. 15 and 16, in plan view, the plurality of the first elastic bodies 3G is staggered regularly and are spaced apart from each other. In plan view, a shape each of the plurality of the first elastic bodies 3G is circular. The shape each of the plurality of the first elastic bodies 3G in plan view is not limited to being circular. The shape each of the plurality of the first elastic bodies 3G may be polygonal or oval. In plan view, the shape each of the plurality of the first elastic bodies 3G may differ from each other. In plan view, the plurality of the first elastic bodies 3G may be arranged randomly.

The plurality of the second elastic bodies 4G is configured in substantially the same way as the plurality of the second elastic bodies 4 in the first embodiment with the exception that, in plan view, a shape each of the plurality of the second elastic bodies 4G are different from that each of the plurality of the second elastic bodies 4. In the example shown in Figs. 15 and 16, the plurality of second elastic bodies 4G is configured to be symmetrical with the plurality of first elastic bodies 3G with respect to the heat insulator 2. In plan view, the plurality of the second elastic bodies 4G is staggered regularly and spaced apart from each other. In plan view, the shape each of the plurality of the second elastic bodies 4G is circular. The shape each of the plurality of the second elastic body 4G in plan view is not limited to being circular. However, the shape each of the plurality of second elastic bodies 4G may be polygonal or oval. In plan view, the shape each of the plurality of the second elastic bodies 4G may differ from each other. In plan view, the plurality of the second elastic bodies 4G may be arranged randomly. In plan view, the shape each of the plurality of the second elastic bodies 4G may differ from that each of the plurality of the first elastic bodies 3G.

Thermal insulation between the battery cells 10 can also be suitably enhanced in the above described eighth embodiment. Each of the plurality of the first elastic bodies 3G is arranged in a scattered formation when viewed in the thickness direction of the heat insulator 2. Therefore, spaces defined between the plurality of first elastic bodies 3G are open in every direction along the heat insulator 2. An advantage obtained by this arrangement is that it is possible to facilitate dissipation of heat from the battery cell 10 irrespective of an orientation in which the battery-cushioning member 1G has been installed. Each of the plurality of the second elastic bodies 4G is arranged in a scattered formation when viewed in the thickness direction of the heat insulator 2. This also leads to an advantage that heat from the battery cell 10 can be easily dissipated.

### 9. Ninth Embodiment

A ninth embodiment of the present disclosure will now be described. In the modes exemplified below, elements having functions substantially the same as those of the first embodiment are denoted by reference signs used in the description of the first embodiment, and detailed explanation thereof is omitted as appropriate.

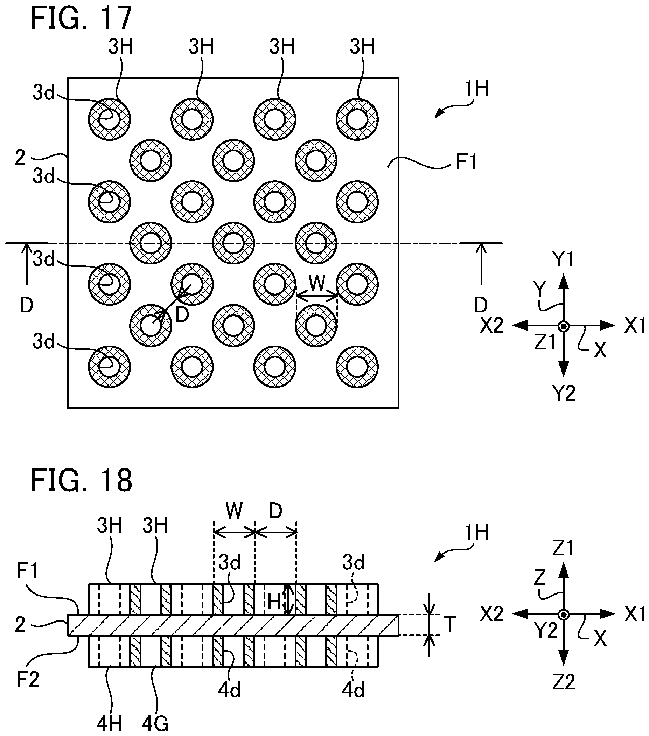

Fig. 17 is a plan view of a battery-cushioning member 1H according to a ninth embodiment. Fig. 18 is a cross-sectional view taken along Line E-E in Fig. 17. The battery-cushioning member 1H is configured in substantially the same way as the above-described battery-cushioning member 1 of the first embodiment, with the exception that a plurality of first elastic bodies 3H and a plurality of second elastic bodies 4H are substituted for the plurality of the first elastic bodies 3 and the plurality of the second elastic bodies 4.

The plurality of the first elastic bodies 3H is configured in substantially the same way as the plurality of first elastic bodies 3 of the first embodiment, with the exception that, in plan view, a shape each of the plurality of the first elastic bodies 3H is different from that each of the plurality of the first elastic bodies 3. In an example shown in Figs. 17 and 18, in plan view, the plurality of the first elastic bodies 3H are staggered regularly and spaced apart from each other. In plan view the plurality of each of the first elastic bodies 3H is annular. In other words, each of the plurality of the first elastic bodies 3H has a cylindrical shape with a hollow portion 3d. The hollow portion 3d is a hole extending over the entire height of the first elastic body 3H. In plan view, the shape each of the plurality of the first elastic bodies 3H is not limited to being annular. For example, the shape each of the plurality of the first elastic bodies 3H may be annular polygonal. In plan view, the shape each of the plurality of the first elastic bodies 3H may differ from each other.

The plurality of the second elastic bodies 4H is configured in substantially the same way as the plurality of the second elastic bodies 4 of the first embodiment, with the exception that, in plan view, a shape each of the plurality of the second elastic bodies 4H is different from that each of the plurality of the first elastic bodies 3. In the example shown in Figs. 17 and 18, the plurality of the second elastic bodies 4H is symmetrical with the plurality of the first elastic bodies 3H with respect to the heat insulator 2. In plan view, the plurality of the second elastic bodies 4H is staggered regularly and spaced apart from each other. In plan view, the shape each of the plurality of the second elastic bodies 4H is annular. In other words, the plurality of the second elastic bodies 4H each has a cylindrical shape with a hollow portion 4d. The hollow portion 4d is a hole extending over the entire height of the second elastic body 4H. In plan view, the shape each of the plurality of the second elastic bodies 4H is not limited to being annular. For example, the shape each of the plurality of the second elastic bodies 4H may be annular polygonal. In plan view, the plurality of the second elastic bodies 4H may differ in shape from each other. In plan view, the plurality of the second elastic bodies 4H may differ in shape from those of the plurality of the first elastic bodies 3H.

Thermal insulation between the battery cells 10 can be suitably enhanced according to the ninth embodiment. Similarly to the eighth embodiment, the plurality of the first elastic bodies 3H appear scattered when viewed in the thickness direction of the heat insulator 2, and plurality of the second elastic bodies 4H appear scattered when viewed in the thickness direction of the heat insulator 2. Therefore, an advantage is obtained in that it is possible to facilitate dissipation of heat from the battery cells 10. As described above, the first elastic body 3H and the second elastic body 4H are provided with hollow portions 3d and 4d, respectively. As a result, thermal insulation of the first elastic body 3H and the second elastic body 4H can be enhanced over a configuration without hollow portions. Furthermore, since the hollow portion 3d extends in the thickness direction of the heat insulator 2, the contact area of the first elastic body 3H with each of the heat insulator 2 and the battery cells 10 can be reduced while ensuring requisite rigidity for the first elastic body 3H. Similarly, since the hollow portion 4d extends in the thickness direction of the heat insulator 2, the contact area of the second elastic body 4H with each of the heat insulator 2 and the battery cells 10 can be reduced while ensuring requisite rigidity of the second elastic body 4H. Thermal insulation between the battery cells 10 can thereby be effectively enhanced.

### 10. Modifications

The embodiments described above can be modified in different manners. Specific modifications that can be applied to the above-described embodiments are exemplified below. Two or more modifications freely selected from those exemplified below can be combined as long as they do not contradict each other.

### 10-1. First Modification

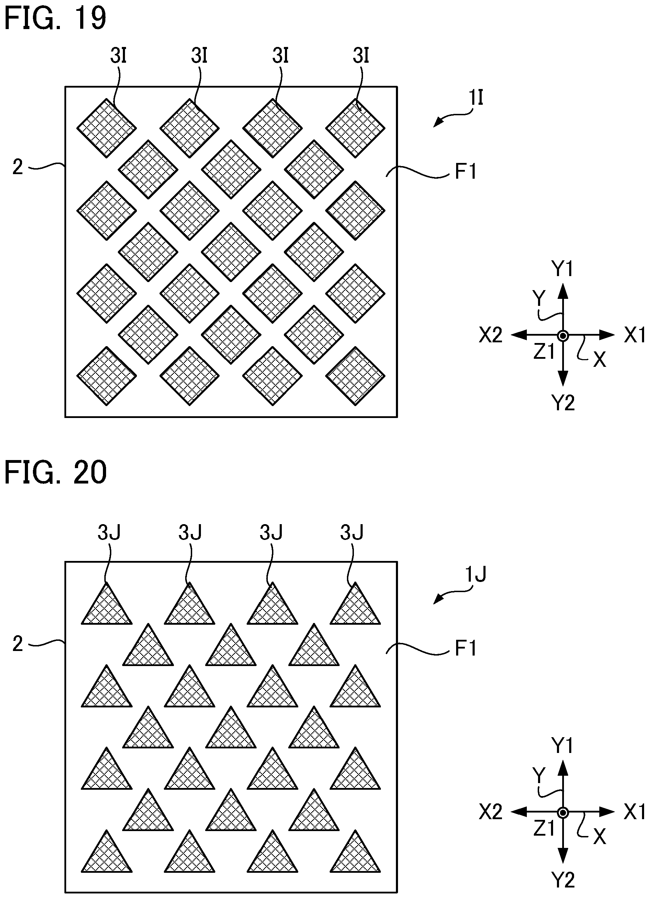

Fig. 19 is a plan view of a battery-cushioning member 1I according to a first modification. The battery-cushioning member 1I is configured in substantially the same way as the battery-cushioning member 1 of the above described first embodiment, with the exception of having a plurality of first elastic bodies 3I in place of the plurality of the first elastic bodies 3. The plurality of the first elastic bodies 3I is configured in substantially the same way as the plurality of the first elastic bodies 3G of the above described eighth embodiment, with the exception that in plan view a shape each of the plurality of the first elastic bodies 3I is different from that each of the plurality of the first elastic bodies 3G. The shape each of the plurality of the first elastic bodies 3I is a rectangle, and includes four oblique sides relative to the X and Y axes. Thermal insulation between the battery cells 10 can also be suitably enhanced by the first modification described above. The battery-cushioning member 1I may be configured to be symmetric or asymmetric relative to the heat insulator 2.

### 10-2. Second Modification

Fig. 20 is a plan view of a battery-cushioning member 1J according to a second modification. The battery-cushioning member 1J is configured in substantially the same way as the battery-cushioning member 1 of the above-described first embodiment, with the exception of having a plurality of first elastic bodies 3J in place of the plurality of the first elastic bodies 3. The plurality of the first elastic bodies 3J is configured in substantially the same way as the plurality of the first elastic bodies 3G of the eighth embodiment described above, with the exception that in plan view a shape each of the plurality of the first elastic bodies 3J is different from that each of the plurality of the first elastic bodies 3G. The shape each of the plurality of the first elastic bodies 3J is a triangle. Thermal insulation between the battery cells 10 can also be suitably enhanced by the second modification. The battery-cushioning member 1J may be configured to be symmetric or asymmetric relative to the heat insulator 2.

### 10-3. Third Modification

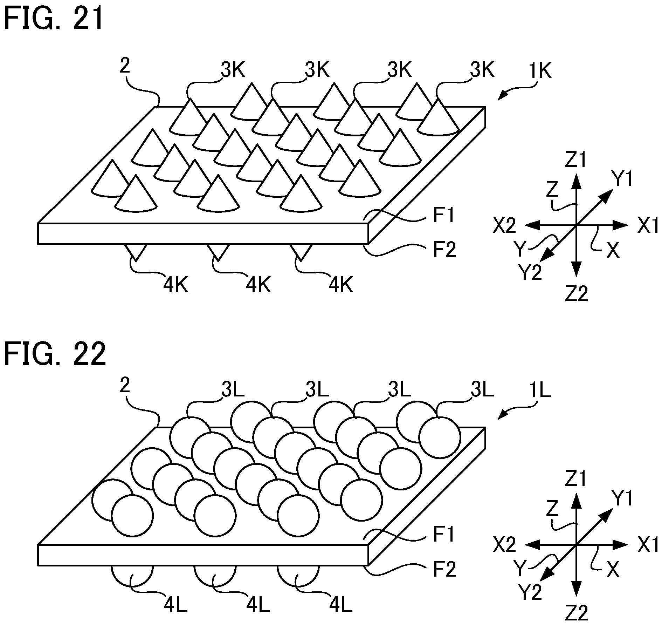

Fig. 21 is a perspective view of a battery-cushioning member 1K according to a third modification. The battery-cushioning member 1K is configured in substantially the same way as the battery-cushioning member 1 of the above-described first embodiment, with the exception that it has a plurality of first elastic bodies 3K in place of the plurality of the first elastic bodies 3. The plurality of the first elastic bodies 3K is configured substantially in the same way as the plurality of first elastic bodies 3G of the eighth embodiment described above, with the exception that the shape each of the plurality of the first elastic bodies 3K has a different shape. The shape each of the plurality of the first elastic bodies 3K is conical. Thermal insulation between the battery cells 10 can also be enhanced by the third modification. The battery-cushioning member 1K may be configured to be symmetric or asymmetric relative to the heat insulator 2.

### 10-4. Fourth Modification

Fig. 22 is a perspective view of a battery-cushioning member 1L according to a fourth modification. The battery-cushioning member 1L is configured in substantially the same way as the battery-cushioning member 1 of the above-described first embodiment, with the exception that it has a plurality of first elastic bodies 3L in place of the plurality of the first elastic bodies 3. The plurality of the first elastic bodies 3L is configured in substantially the same way as the plurality of the first elastic bodies 3G of the eighth embodiment described above, with the exception that a shape each of the plurality of the first elastic bodies 3L is different from that each of the plurality of the first elastic bodies 3G. The shape each of the plurality of first elastic bodies 3L is spherical. Thermal insulation between the battery cells 10 can also be suitably enhanced by the fourth modification described above. The battery-cushioning member 1L may be configured to be symmetric or asymmetric relative to the heat insulator 2.

### 10-5. Fifth Modification

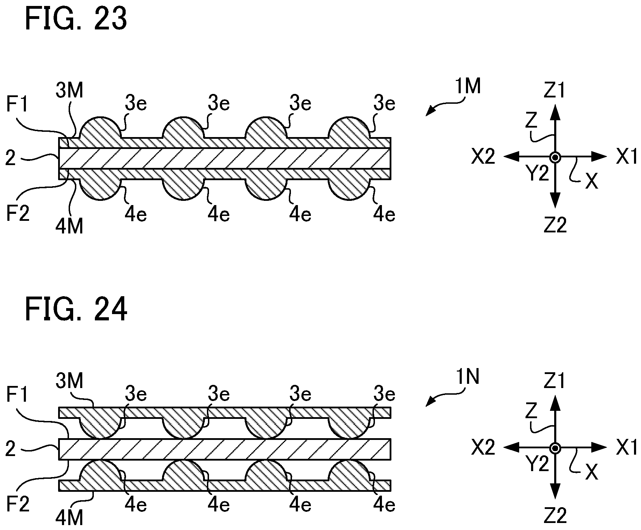

Fig. 23 is a cross-sectional view of a battery-cushioning member 1M according to a fifth modification. The battery-cushioning member 1M is configured in substantially the same way as the battery-cushioning member 1 of the above-described first embodiment, with the exception that it has a first elastic body 3M and a second elastic body 4M in place of the plurality of the first elastic bodies 3 and the plurality of the second elastic bodies 4. The first elastic body 3M is sheet-shaped, and on one face thereof there is provided a plurality of protrusions 3e. The second elastic body 4M is also sheet-shaped, and on one face thereof there is provided a plurality of protrusions 4e. In the example shown in Fig. 23, the other face of each of the first elastic body 3M is joined to the first surface F1, and the other face of the second elastic body 4M is joined to the second surface F2 of the heat insulator 2. The protrusions 3e each have substantially the same shape as that of the first elastic body 3 of the first embodiment. The protrusions 4e each have the substantially same shape as the second elastic body 4 of the first embodiment. The thermal insulation between the battery cells 10 can be suitably enhanced also by the fifth modification described above. The battery-cushioning member 1M may be configured symmetrically or asymmetrically relative to the heat insulator 2.

### 10-6. Sixth Modification

Fig. 24 is a cross-sectional view of a battery-cushioning member 1N according to a sixth modification. The battery-cushioning member 1N is configured substantially the same as the battery-cushioning member 1M according to the sixth modification, except the first elastic body 3M and the second elastic body 4M are joined to the heat insulator 2 with the orientation of the surfaces of the first elastic body 3M and the second elastic body 4M being reversed. The thermal insulation between the battery cells 10 can be suitably enhanced also by the sixth modification described above.

### 10-7. Seventh Modification

In each of the embodiments and modifications described above, elastic bodies are joined to both faces of the heat insulator 2. However, it is not limited thereto, and the heat insulator 2 may have an elastic body joined to only one face. In such a case, the elastic body joined to one face of the heat insulator 2 corresponds to "the first elastic body."

### Description of Reference Signs

- 1: battery-cushioning member
- 1A: battery-cushioning member
- 1B: battery-cushioning member
- 1C: battery-cushioning member
- 1D: battery-cushioning member
- 1E: battery-cushioning member
- 1F: battery-cushioning member
- 1G: battery-cushioning member
- 1H: battery-cushioning member
- 1I: battery-cushioning member
- 1J: battery-cushioning member
- 1K: battery-cushioning member
- 1L: battery-cushioning member
- 1M: battery-cushioning member
- 1N: battery-cushioning member
- 2: heat insulator
- 3: first elastic body
- 3A: first elastic body
- 3B: first elastic body
- 3C: first elastic body
- 3D: first elastic body
- 3E: first elastic body
- 3F: first elastic body
- 3G: first elastic body
- 3H: first elastic body
- 3I: first elastic body
- 3J: first elastic body
- 3K: first elastic body
- 3L: first elastic body
- 3M: first elastic body
- 3a: hollow portion
- 3b: hole
- 3c: hole
- 3d: hollow portion
- 3e: protrusion
- 4: second elastic body
- 4A: second elastic body
- 4B: second elastic body
- 4C: second elastic body
- 4D: second elastic body
- 4E: second elastic body
- 4F: second elastic body
- 4G: second elastic body
- 4H: second elastic body
- 4M: second elastic body
- 4a: hollow portion
- 4b: hole
- 4c: hole
- 4d: hollow portion
- 4e: protrusion
- 10: battery cell
- 10_1: battery cell
- 10_2: battery cell
- 100: battery
- 110: restrainer
- 111: casing
- 112: lid
- D: distance
- F1: first surface
- F2: second surface
- H: height
- S1: space
- S2: space
- T: thickness
- W: width

## Claims

1. A battery-cushioning member disposed between a first rigid body and a second rigid body, the battery-cushioning member comprising:
a sheet-shaped heat insulation member with a first surface and a second surface that faces in a direction opposite to that of the first surface; and
at least one first elastic body disposed on the first surface and formed integrally with the heat insulation member, the at least one first elastic body creating a partial space between the first surface and the first rigid body.

2. The battery-cushioning member according to claim 1, further comprising at least one second elastic body disposed on the second surface and formed integrally with the heat insulation member, the at least one second elastic body creating a partial space between the second surface and the second rigid body.

3. The battery-cushioning member according to claim 1 or claim 2, wherein the at least one first elastic body comprises a plurality of first elastic bodies spaced apart from each other as viewed in a thickness direction of the heat insulation member.

4. The battery-cushioning member according to claim 3, wherein:
the plurality of the first elastic bodies each has a shape that extends linearly as viewed in the thickness direction of the heat insulation member; and
the plurality of the first elastic bodies is disposed parallel to each other.

5. The battery-cushioning member according to claim 3, wherein each of the plurality of the first elastic bodies is arranged scattered as viewed in the thickness direction of the heat insulation member.

6. The battery-cushioning member according to claim 3, wherein each of the plurality of the first elastic bodies has a shape that is reduced in width in a direction away from the heat insulation member.

7. The battery-cushioning member according to claim 1 or claim 2, wherein the at least one elastic body comprises a lattice as viewed in a thickness direction of the heat insulation member.

8. The battery-cushioning member according to claim 1, wherein the at least one elastic body has a hollow portion.

9. The battery-cushioning member according to claim 1, wherein the heat insulation member has a Young's modulus higher than that of the at least one first elastic body.

10. The battery-cushioning member according to claim 1, wherein the heat insulation member is composed of a resin material or an inorganic compound.

11. The battery-cushioning member according to claim 9 or claim 10, wherein the heat insulation member comprises a porous material.

12. The battery-cushioning member according to claim 11, wherein the at least one first elastic body is composed of an elastomeric material.

13. The battery-cushioning member according to claim 1, wherein the at least one first elastic body is composed of a same material as the heat insulation member and is formed integrally with the heat insulation member without any joining interface.

14. The battery-cushioning member according to claim 1, wherein the at least one first elastic body is joined to the heat insulation member without an adhesive.

15. The battery-cushioning member according to claim 1, wherein the at least one first elastic body is joined to the heat insulation member with an adhesive.
